# EUROPÄISCHE PATENTSCHRIFT

(11) **EP 4 036 424 B1**
(45) Veröffentlichungstag und Bekanntmachung des Hinweises auf die Patenterteilung: **05.11.2025**
(21) Anmeldenummer: 21210442.6
(22) Anmeldetag: 25.11.2021
(51) Int. Cl.: A47B 47/00, F16B 7/04, F16B 12/24, F16B 13/02, F16B 19/00, F16B 19/02, F16B 4/00

(54) **PROFILSYSTEM**
PROFILE SYSTEM
SYSTÈME DE PROFILÉ

(30) Priorität: 01.02.2021 DE 202021100478 U
(43) Veröffentlichungstag der Anmeldung: 03.08.2022
(73) Patentinhaber: Schlüter-Systems KG, 58640 Iserlohn (DE)
(72) Erfinder: SCHLÜTER, Marc, 58636 Iserlohn (DE)
(74) Vertreter: Schröter & Albrecht Patentanwälte PartG mbB

(56) Entgegenhaltungen:
- EP-A2- 0 843 103
- DE-A1- 3 401 032
- DE-U1- 202017 107 404
- US-A- 3 759 623

## Beschreibung

Die vorliegende Erfindung betrifft ein System umfassend längliche Profile, die über ihre Länge einen konstanten Querschnitt aufweisen, sowie Zwischen- und/oder Abschlusselemente, die dazu ausgelegt sind, zwischen Profilen angeordnet zu werden oder ein Profil stirnseitig abzuschließen.

Profilsysteme der eingangs genannten Art sind im Stand der Technik in unterschiedlichsten Ausgestaltungen bekannt. Die Zwischen- und/oder Abflusselemente sind normalerweise mit einem oder mehreren auswärts vorstehenden Verbindungsabschnitten ausgeführt, die sich stirnseitig in den Querschnitt eines Profils einsetzen lassen. Die Befestigung eines Zwischen- und/oder Abschlusselementes kann dann beispielsweise unter Verwendung eines Klebstoffs folgen. Auch sind Varianten bekannt, bei denen die Abmessungen der Außenkonturen der Verbindungsabschnitte der Zwischen- und/oder Abschlusselemente derart an die Innenkontur des Querschnitts der Profile angepasst sind, dass sich die Verbindungsabschnitte unter Druckausübung reibschlüssig in die Profile einsetzen lassen. Die zuletzt genannte Variante setzt allerdings geringe Toleranzen voraus, was die Fertigung sowohl der Profile als auch der Zwischen- und/oder Abschlusselemente deutlich erschwert und verteuert.

Weiteren Stand der Technik bilden die Druckschriften EP 0 843 103 A2, DE 34 01 032 A1, US 3 759 623 A, DE 20 2017 107 404 U1, EP 0 344 120 A1, US 2011/050052 A1, US 6,305,892 B1, US 4,484,407 A und US 7,377,823 B2.

Ausgehend von diesem Stand der Technik ist es eine Aufgabe der vorliegenden Erfindung, ein System der eingangs genannten Art zu schaffen, mit dem sich die Zwischen- und/oder Abschlusselemente sicher und lösbar stirnseitig an den Profilen befestigen lassen.

Zur Lösung dieser Aufgabe schafft die vorliegende Erfindung ein System umfassend längliche Profile, die über ihre Länge einen konstanten Querschnitt aufweisen, Zwischen- und/oder Abschlusselemente, die dazu ausgelegt sind, zwischen Profilen angeordnet zu werden oder ein Profil stirnseitig abzuschließen, und jeweils zwei Endbereiche aufweisende, als separate Bauteile vorgesehene Verbindungsstifte, die dazu ausgelegt sind, ein Profil stirnseitig mit einem Zwischen- und/oder Abschlusselement lösbar zu verbinden, wobei die Profilquerschnitte stirnseitig Aufnahmeöffnungen zur Aufnahme des ersten Endbereiches eines Verbindungsstiftes bilden, wobei die Zwischen- und/oder Abschlusselemente Aufnahmelöcher zur Aufnahme des zweiten Endbereiches eines Verbindungsstiftes aufweisen, wobei sich die Aufnahmelöcher der Zwischen- und/oder Abschlusselemente jeweils durch eine Wand in einen Hohlraum des Zwischen- und/oder Abschlusselements erstrecken, wobei der erste Endbereich der Verbindungsstifte einen radial auswärts gewölbten Klemmabschnitt maximalen Durchmessers aufweist, der mit zumindest einer länglichen, sich in Längsrichtung des Verbindungsstiftes und durch diesen radial hindurch erstreckenden Aussparung versehen ist, wobei die Abmessungen des Klemmabschnitts derart an die Abmessungen der Aufnahmeöffnungen angepasst sind, dass sich der Klemmabschnitt unter Erzeugung eines Form- und Kraftschlusses in eine Aufnahmeöffnung einsetzen lässt, und wobei der zweite Endbereich einen eine ringförmige Vertiefung aufweisenden Aufnahmeabschnitt umfasst, dessen Abmessungen derart an die Abmessungen der Aufnahmelöcher angepasst sind, dass der Aufnahmeabschnitt die ein Aufnahmeloch umgebende Außenwand eines Zwischen- und/oder Abschlusselements zumindest formschlüssig aufnimmt.

Ein wesentlicher Vorteil des erfindungsgemäßen Systems besteht darin, dass sich die einzelnen Komponenten aufgrund nicht zu kleiner Toleranzbereiche einfach und preiswert fertigen lassen. Die Fixierung eines Verbindungsstiftes an einem Profil erfolgt über den radial auswärts gewölbten Klemmabschnitt des ersten Endbereiches eines Verbindungsstiftes, dessen Außendurchmesser beim Einführen in eine Aufnahmeöffnung des Profils komprimiert wird, wodurch zeitgleich eine form- und kraftschlüssige Verbindung erzeugt wird. Die zur Stauchung des Außendurchmessers des Klemmabschnittes erforderlicher Elastizität wird durch die Aussparung des Klemmabschnitts bereitgestellt. Die Verbindung eines Verbindungsstiftes mit einem Zwischen- und/oder Abschlusselement erfolgt über den Aufnahmeabschnitt des zweiten Endbereiches des Verbindungsstiftes, der mit der ringförmigen Vertiefung versehen ist. Wird das freie Ende des zweiten Endbereiches in ein Aufnahmeloch eines Zwischen- und/oder Abschlusselementes mit Druck eingeführt, so wird eine zumindest formschlüssige Verbindung erzielt, sobald die das entsprechende Aufnahmeloch umgebende Außenwand des Zwischen- und/oder Abschlusselementes in die ringförmige Vertiefung des Aufnahmeabschnitts einschnappt oder einrastet. Insgesamt lassen sich die Komponenten des erfindungsgemäßen Systems schnell und einfach montieren, wodurch eine sehr gute Handhabbarkeit erzielt wird. Dabei wird eine sehr verlässliche und dennoch lösbare Verbindung zwischen den einzelnen Komponenten bereitgestellt.

Bevorzugt verjüngt sich der Durchmesser des ersten Endbereiches der Verbindungsstifte ausgehend von dem Klemmabschnitt zum freien Ende hin, wodurch ein insbesondere konusförmiger Einführabschnitt erzeugt wird, der das Einsetzen des freien Endes des ersten Endbereiches in eine Aufnahmeöffnung eines Profils deutlich erleichtert.

Der erste Endbereich der Verbindungsstifte weist vorteilhaft einen benachbart zum Klemmabschnitt angeordneten, zum zweiten Endbereich weisenden Stützabschnitt auf, der mit in Umfangsrichtung beabstandet zueinander angeordneten, radial auswärts vorstehenden Stützvorsprüngen versehen ist. Die Abmessungen der Stützvorsprünge sind vorteilhaft derart gewählt, dass sie sich beim Einsetzen des ersten Endbereiches in eine entsprechende Aufnahmeöffnung eines Profils an das Profil anlegen, um auch hier einen Formschluss zu erzielen. Der Außendurchmesser des ersten Endbereiches im Bereich der Stützvorsprünge entspricht vorteilhaft dem Durchmesser der Aufnahmeöffnungen oder ist geringfügig größer. Letztere Variante ist insbesondere dann zu bevorzugen, wenn das Material der Verbindungsstifte deutlich weicher oder deutlich härter als das Material der Profile ist, so dass die Stützvorsprünge entweder materialbedingt gestaucht werden oder sich in das Material der Profile eindrücken. Die Stützvorsprünge sind insbesondere länglich ausgebildet und erstrecken sich in Längsrichtung des Verbindungsstiftes.

Gemäß einer Ausgestaltung der vorliegenden Erfindung ist der Stützabschnitt des ersten Endbereiches unmittelbar benachbart zum Aufnahmeabschnitt des zweiten Endbereiches angeordnet.

Vorteilhaft verjüngt sich der Durchmesser des zweiten Endbereiches der Verbindungsstifte ausgehend vom Aufnahmeabschnitt zum freien Ende, so dass auch am Ende des zweiten Endbereiches ein insbesondere konusförmiger Einführabschnitt vorhanden ist, der das Einführen des zweiten Endbereiches in ein Aufnahmeloch eines Zwischen- und/oder Abflusselementes erleichtert.

Gemäß einer Ausgestaltung der vorliegenden Erfindung ist der zweite Endbereich der Verbindungsstifte mit einer sich ausgehend vom freien Ende des zweiten Endbereiches in Längsrichtung des Verbindungsstiftes und radial durch diesen hindurch erstreckenden Nut versehen. Eine derart ausgebildete Nut ermöglicht eine Stauchung des Außendurchmessers des zweiten Endbereiches beim Einführen in ein entsprechendes Aufnahmeloch eines Zwischen- und/oder Abschlusselementes, was das Herstellen der zuvor beschriebene Rastverbindung vereinfacht.

Vorteilhaft erstreckt sich die Nut durch den gesamten zweiten Endbereich der Verbindungsstifte, wodurch eine sehr gute Flexibilität sichergestellt ist.

Bevorzugt sind die Verbindungsstifte aus Kunststoff hergestellt, beispielsweise aus ABS bzw. Acrylnitril-Butadien-Styrol, aus PC bzw. Polycarbonat oder dergleichen.

Insbesondere sind die Verbindungsstifte als Spritzgussteile hergestellt.

Die Abmessungen der Sichtflächen der Profile und die Abmessungen der Sichtflächen der Zwischen- und/oder Abschlusselemente sind bevorzugt derart aufeinander abgestimmt, dass diese in miteinander verbundenem Zustand bündig ineinander übergehen, wodurch ein optisch ansprechendes Erscheinungsbild erzielt wird.

Die Profilquerschnitte sind stirnseitig vorteilhaft jeweils mit zwei Aufnahmeöffnungen und die Zwischen- und/oder Abschlusselemente an zumindest einer Wand jeweils mit zwei entsprechend positionierten Aufnahmelöchern versehen. Dies führt dazu, dass ein Profil mit einem Zwischen- und/oder Abschlusselement unter Verwendung von zwei Verbindungsstiften verbunden werden kann, wodurch eine Verdrehsicherung bereitgestellt wird. Somit ist stets eine ordnungsgemäße relative Positionierung der Bauteile gewährleistet.

Vorteilhaft sind die Profile und die Zwischen- und/oder Abschlusselemente aus dem gleichen Material hergestellt, was zu einem einheitlichen Erscheinungsbild führt.

Insbesondere handelt es sich bei den Profilen um Fliesenabschlussprofile, um Leuchtmittel aufnehmende Profile oder um Kabelkanalprofile. Mit Leuchtmittel aufnehmenden Profilen sind insbesondere solche Profile gemeint, an denen LED-Streifen und gegebenenfalls Streuscheiben befestigt sind.

Weitere Merkmale und Vorteile der vorliegenden Erfindung werden anhand der nachfolgenden Beschreibung von Systemen gemäß Ausführungsformen der vorliegenden Erfindung unter Bezugnahme auf die beiliegende Zeichnung deutlich. Darin ist
Figur 1 eine Stirnseitenansicht eines Profils gemäß einer ersten Ausführungsform der vorliegenden Erfindung;
Figur 2 eine perspektivische Ansicht eines Zwischenelementes gemäß einer Ausführungsform der vorliegenden Erfindung;
Figur 3 eine Seitenansicht des eines Verbindungsstiftes gemäß einer Ausführungsform der vorliegenden Erfindung
Figur 4 eine perspektivische Ansicht des in Figur 3 dargestellten Verbindungsstiftes;
Figur 5 eine Stirnseitenansicht des Verbindungsstiftes in Richtung des Pfeils V in Figur 4;
Figur 6 eine perspektivische Explosionsansicht der in den Figuren 1 bis 5 dargestellten Komponenten während ihrer der Montage;
Figur 7 eine Stirnseitenansicht eines Profils gemäß einer zweiten Ausführungsform der vorliegenden Erfindung;
Figur 8 eine perspektivische Explosions-Rückansicht der in den Figuren 3 bis 5 sowie 7 dargestellten Komponenten während der Montage unter Verwendung eines Zwischenelementes gemäß einer zweiten Ausführungsform der vorliegenden Erfindung;
Figur 9 eine perspektivische Explosions-Vorderansicht der in Figur 8 dargestellten Anordnung;
Figur 10 eine Stirnseitenansicht eines Profils gemäß einer dritten Ausführungsform der vorliegenden Erfindung;
Figur 11 eine perspektivische Ansicht eines Abschlusselementes gemäß einer Ausführungsform der vorliegenden Erfindung; und
Figur 12 eine perspektivische Explosionsansicht der in den Figuren 3 bis 5 sowie 10 und 11 dargestellten Komponenten während der Montage.

Gleiche Bezugsziffern betreffend nachfolgend gleiche oder gleichartig ausgebildete Bauteile oder Bauteilbereiche.

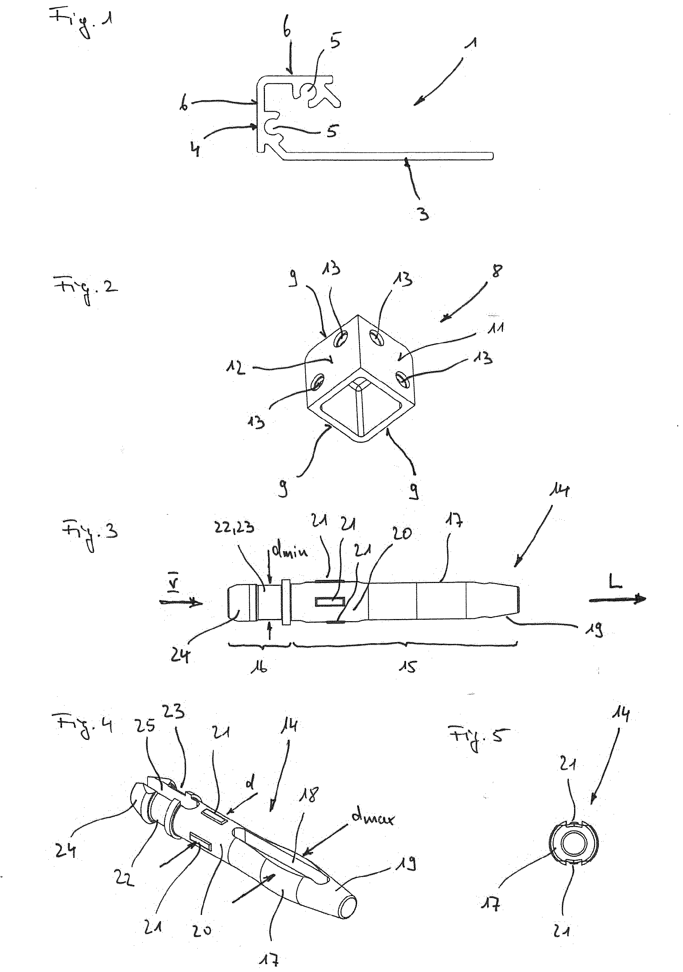

Figur 1 zeigt ein Profil 1, bei dem es sich vorliegend um ein Fliesenabschlussprofil handelt. Dieses kann aus Edelstahl, Aluminium oder Kunststoff hergestellt sein. Das Profil 1 umfasst einen mit Ausstanzungen 2 versehenen Befestigungsabschnitt 3, mit dem das Profil 1 an einem Untergrund festgelegt wird, und einen Anlageabschnitt 4, an dem auf dem Befestigungsabschnitt 3 verlegte Fliesen stirnseitig anliegen und der zwei Sichtflächen 6 bildet. Das vorliegend als Strangprofil ausgebildete Profil 1 weist, abgesehen von den Ausstanzungen 2, über seine Länge einen konstanten Querschnitt auf und ist stirnseitig mit zwei Aufnahmeöffnungen 5 versehen. Die Form der Aufnahmeöffnungen 5 entspricht vorliegend jeweils der eines sich über mehr als 180° erstreckenden Kreissegments.

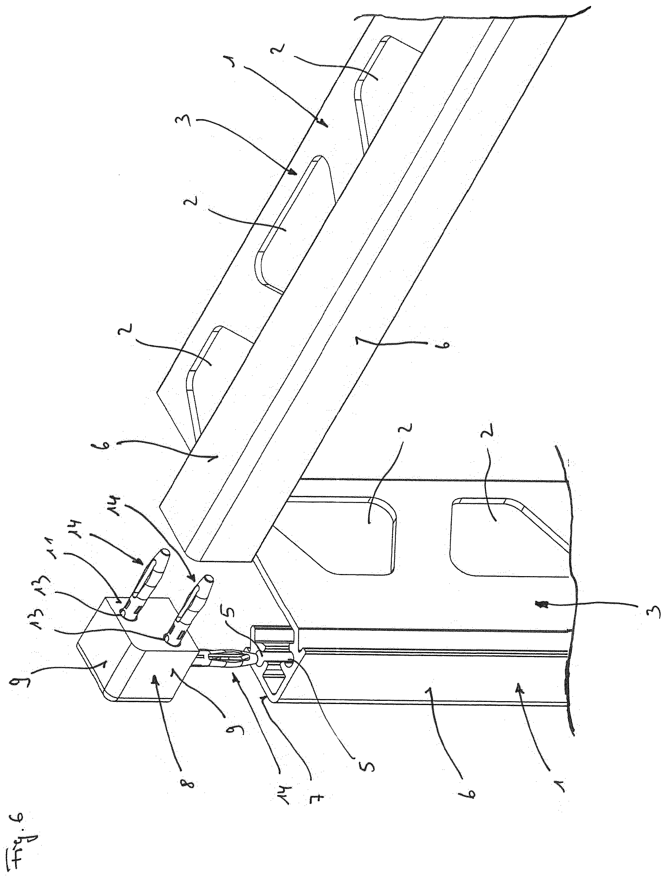

Figur 2 zeigt ein Zwischenelement 8, das im Wesentlichen als hohler Würfel mit offener Unterseite ausgebildet ist, wobei drei Flächen Sichtflächen 9 bilden. Die Abmessungen der Sichtflächen 9 des Zwischenelements 8 sind derart an die Abmessungen der Sichtflächen 6 des Profils 1 angepasst, dass diese Flächen bündig ineinander übergehen, sobald das Profil 1 und das Zwischenelement 8 miteinander verbunden werden, wie es in Figur 6 erkennbar ist. Benachbart angeordnete Außenwände 11 und 12 des Zwischenprofils 5, die keine Sichtflächen bilden, sind jeweils mit zwei Aufnahmelöchern 13 versehen, deren Positionen entsprechend den Positionen der Aufnahmeöffnungen 5 des Profils 1 gewählt sind. Die Aufnahmelöcher 13 erstrecken sich jeweils durch die Außenwände 11 und 12 in den Hohlraum des Zwischenelements 8. Das Material des Zwischenelements 8 ist bevorzugt entsprechend dem Material des Profils 1 gewählt.

Die Figuren 3 bis 5 zeigen einen Verbindungsstift 14 gemäß einer Ausführungsform der vorliegenden Erfindung, der dazu ausgelegt ist, dass das Profil 1 stirnseitig mit dem Zwischenelement 8 lösbar zu verbinden. Der Verbindungsstift 14 umfasst einen ersten Endbereich 15 und einen zweiten Endbereich 16. Der erste Endbereich 15 dient dazu, in die Aufnahmeöffnung 5 des Profils 1 eingesetzt zu werden. Er umfasst einen radial auswärts gewölbten Klemmabschnitt 17 maximalen Durchmessers dₘₐₓ, der mit einer länglichen, sich in Längsrichtung L des Verbindungsstiftes 14 und durch diesen radial hindurch erstreckenden Aussparung 18 versehen ist. Die Abmessungen des Klemmabschnitts 17 sind dabei derart an die Abmessungen der Aufnahmeöffnungen 5 des Profils 1 angepasst, dass sich der Klemmabschnitt 17 unter Erzeugung eines Form- und Kraftschlusses in eine Aufnahmeöffnung 5 einsetzen lässt. Der Durchmesser des ersten Endbereiches 15 verjüngt sich ausgehend von dem Klemmabschnitt 11 zum freien Ende hin, wodurch ein konusförmiger Einführabschnitt 19 gebildet wird. Ferner umfasst der erste Endbereich 15 einen benachbart zum Klemmabschnitt 17 angeordneten, zum zweiten Endbereich 16 weisenden Stützabschnitt 20, der mit in Umfangsrichtung beabstandet zueinander angeordneten, radial auswärts vorstehenden Stützvorsprüngen 21 versehen ist. Die Stützvorsprünge 21 sind vorliegend länglich ausgebildet und erstrecken sich in Längsrichtung L des Verbindungsstiftes 14. Der Außendurchmesser d des Verbindungsstiftes 14 im Bereich der Stützvorsprünge 21 ist geringfügig größer als der Durchmesser der Aufnahmeöffnungen 5 des Profils 1 gewählt. Der zweite Endbereich 16 dient dazu, in eines der Aufnahmelöcher 13 des Zwischenelementes 8 eingesetzt zu werden. Er umfasst einen eine ringförmige Vertiefung 22 aufweisenden Aufnahmeabschnitt 23. Der minimale Durchmesser dₘᵢₙ der ringförmigen Vertiefung 22 ist derart gewählt, dass dieser dem Durchmesser der Aufnahmelöcher 13 des Zwischenelementes 8 entspricht. Der Durchmesser des zweiten Endbereiches 16 verjüngt sich ausgehend vom Aufnahmeabschnitt 23 zum freien Ende hin, wodurch auch hier ein konusförmiger Einführabschnitt 24 gebildet wird. Der zweite Endbereich 16 der Verbindungsstifte 14 ist vorliegend ferner mit einer sich ausgehend vom freien Ende des zweiten Endbereiches 16 in Längsrichtung L des Verbindungsstiftes 14 und radial durch diesen hindurch erstreckenden Nut 25 versehen, die sich bevorzugt durch den gesamten zweiten Endbereich 16 der Verbindungsstifte 14 erstreckt.

Zur Montage der in den Figuren 1 bis 5 dargestellten Komponenten werden zwei Profile 1 stirnseitig unter Verwendung von vier Verbindungsstiften 14 mit dem als Eckverbinder wirkenden Zwischenelement 8 verbunden. Hierzu werden die ersten Endbereiche 15 der Verbindungsstifte 14 jeweils in Aufnahmeöffnungen 5 der Profile 1 und die zweiten Endbereiche 16 der Verbindungsstifte 14 jeweils in Aufnahmelöcher 13 des Zwischenelementes 8 eingeführt. Beim Einführen der ersten Endbereiche 15 der Verbindungsstifte 14 in die zugehörigen Aufnahmeöffnungen 5 der Profile 1, das durch die konusförmigen Einführabschnitte 19 vereinfacht wird, werden die Klemmabschnitte 17 gestaucht, sobald diese mit den Wänden der Aufnahmeöffnungen 5 in Kontakt kommen, so dass sich Bereiche der Außenflächen der Klemmabschnitte 17 unter Druck an die Wände der Aufnahmeöffnungen 5 anlegen. Auf diese Weise wird zeitgleich ein Form- und Kraftschluss hergestellt. Die Komprimierung der Klemmabschnitte 17 wird dabei durch die Aussparungen 18 ermöglicht. Beim weiteren Einschieben der ersten Endbereiche 15 der Verbindungsstifte 14 in die Aufnahmeöffnungen 5 der Profile 1 kommen dann die Stützvorsprünge 21 der jeweiligen Stützabschnitte 20 in Kontakt mit den Wänden der Aufnahmeöffnungen 5, so dass sich auch diese unter leichtem Druck an diese anlegen. Beim Einführen der zweiten Endbereiche 16 der Verbindungsstifte 14 in die zugeordneten Aufnahmelöcher 13 des Zwischenelements 8, das auch hier durch die konusförmigen Einführabschnitte 19 erleichtert wird, wird manuell Druck ausgeübt, bis der Aufnahmeabschnitt 23 die ein Aufnahmeloch 13 umgebende Außenwand 11, 12 des Zwischenelements 8 formschlüssig aufnimmt. In Abhängigkeit von dem Durchmesser des Aufnahmeaufschnitts 23 einerseits und dem Durchmesser der Aufnahmelöcher 13 andererseits kann zusätzlich gegebenenfalls auch ein Kraftschluss erzielt werden, wenn dies gewünscht ist. Insgesamt wird auf diese Weise eine verdrehsicher und lösbar ausgestaltete Verbindung zwischen dem Zwischenelement 8 und den Profilen 1 erzielt.

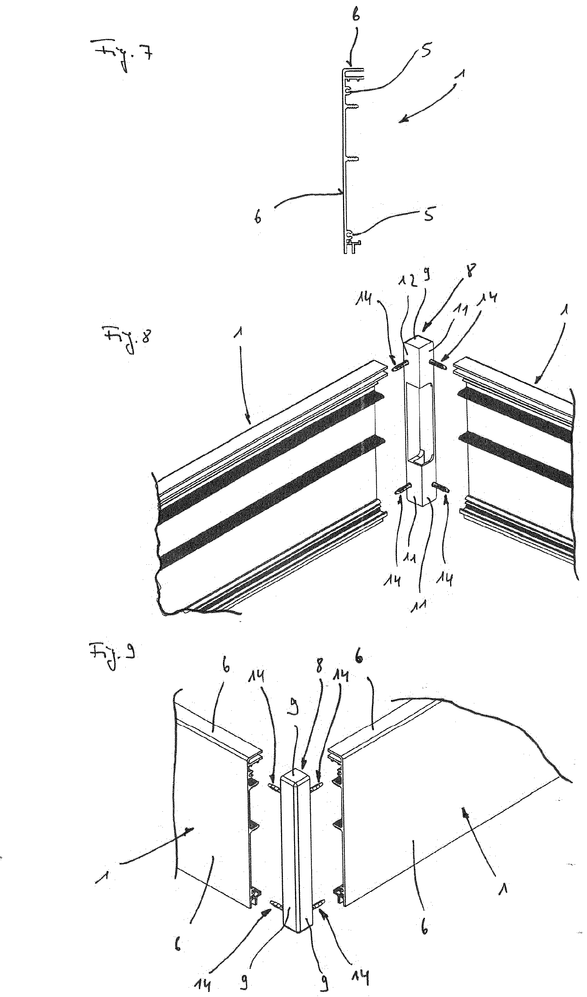

Figur 7 zeigt ein Profil 1 gemäß einer zweiten Ausführungsform, das als Kabelkanalprofil ausgestaltet ist und aus Stahl, Aluminium oder Kunststoff hergestellt sein kann. Das Profil 1 weist einen über seine Länge konstanten Querschnitt auf und ist analog zu dem in Figur 1 dargestellten Profil stirnseitig mit zwei Aufnahmeöffnungen 5 versehen. Es bildet zwei Sichtflächen 6 und 7.

Figur 8 zeigt ein Zwischenelement 8 gemäß einer zweiten Ausführungsform der Erfindung, das im Wesentlichen als hohler Quader mit offener Unterseite ausgebildet ist, wobei drei Flächen Sichtflächen 9 bilden. Die Abmessung der Sichtflächen 9 des Zwischenprofils 8 sind auch hier an die Abmessungen der Sichtflächen 6 des in Figur 7 gezeigten Profils 1 angepasst, so dass diese Flächen bündig ineinander übergehen, sobald das Profil 1 und das Zwischenprofil 8 miteinander verbunden werden, wie es in der Figur 9 erkennbar ist. Benachbart angeordnete Außenwände 11 und 12 des Zwischenprofils 5, die keine Sichtflächen bilden, sind jeweils mit zwei Aufnahmelöchern 13 versehen, deren Positionen entsprechend den Positionen der Aufnahmeöffnungen 5 des Profils 1 gewählt sind. Die Aufnahmelöcher 13 erstrecken sich jeweils durch die Außenwände 11 und 12 in den Hohlraum des Zwischenelements 8. Das Material des Zwischenelements 8 ist bevorzugt entsprechend dem Material des Profils 1 gewählt.

Figur 9 zeigt analog zu Figur 6, wie das in Figur 7 dargestellte Profil 1 mit dem in Figur 8 dargestellten Zwischenelement 8 unter Verwendung der in den Figuren 3 bis 5 dargestellten Verbindungsstifte 14 verbunden wird. Insofern kann hier auf die entsprechenden Ausführungen zur Figur 6 verwiesen werden.

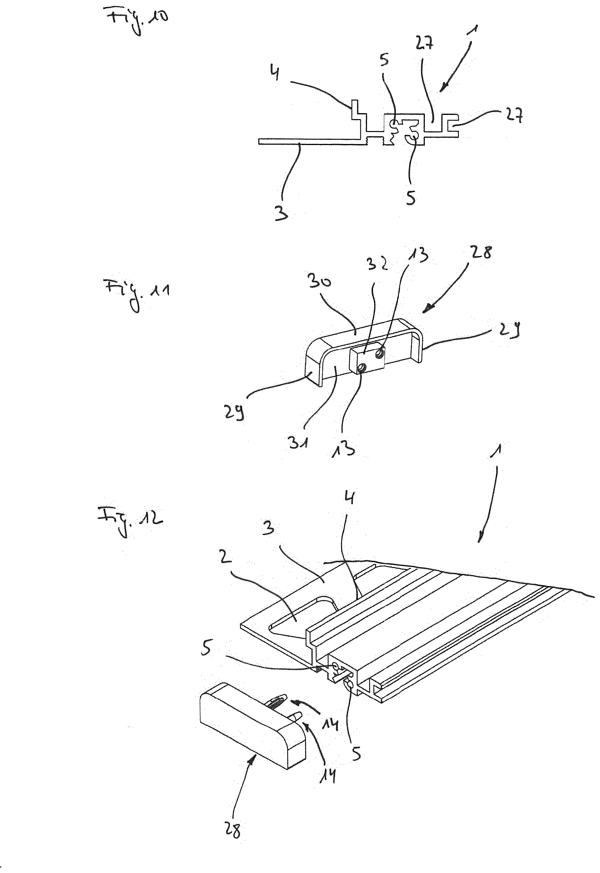

Figur 10 zeigt ein Profil 1, bei dem es sich um ein Fliesenabschlussprofil handelt, das im Treppenbereich Einsatz findet. Dieses kann aus Edelstahl, Aluminium oder Kunststoff hergestellt sein. Das Profil 1 umfasst analog zu dem in Figur 1 dargestellten Profil 1 einen mit Ausstanzungen 2 versehenen Befestigungsabschnitt 3 und einen Anlageabschnitt 4. Ferner ist ein Montageabschnitt 26 vorgesehen, der an seiner Oberseite sowie stirnseitig mit Aufnahmenuten 27 versehen ist, die zur Aufnahme von Befestigungsvorsprüngen einer vorliegend nicht näher dargestellte Trittleiste aus Kunststoff oder Gummi dienen. Das Profil 1, das abgesehen von den Ausstanzungen 2 über seine Länge einen konstanten Querschnitt aufweist, ist stirnseitig mit zwei Aufnahmeöffnungen 5 versehen, die vorliegend im Montageabschnitt 26 positioniert sind.

Figur 11 zeigt ein Abschlusselement 28, das dazu dient, das Profil 1 stirnseitig optisch abzuschließen. Das Zwischenelement 8 ist nach Art eines hohlen Quaders mit offener Unterseite und einer offenen Seitenwand ausgebildet, wobei die Ecken der Übergänge zwischen den einander gegenüber angeordneten Stirnwänden 29 und der die Oberseite bildenden Wand 30 abgerundet ausgeführt sind. Von der seitlichen Wand 31 steht einwärts ein quaderförmiger, ebenfalls hohl ausgebildeter Vorsprung 32 vor, in dem zwei Aufnahmelöcher 13 positioniert sind. Die Positionen der Aufnahmelöcher 13 stimmen dabei wieder mit den Positionen der Aufnahmeöffnungen 5 des in Figur 10 dargestellten Profils überein.

Figur 12 zeigt, wie das in Figur 10 dargestellte Profil 1 und das in Figur 11 dargestellte Abschlusselement 28 unter Verwendung der in den Figuren 3 bis 5 dargestellten Verbindungsstifte 14 miteinander verbunden werden. In diesem Zusammenhang wird wieder auf die entsprechenden Ausführungen zu Figur 6 verwiesen.

Es sollte klar sein, dass die zuvor beschriebenen Ausführungsformen lediglich als Beispiel dienen. Entsprechend sind Modifikationen und Änderungen der darin gezeigten Komponenten möglich, ohne den durch die beiliegenden Ansprüche definierten Schutzbereich zu verlassen.

**Bezugsziffern**

| | | | |
|---|---|---|---|
| 1 | Profil | 29 | Stirnwand |
| 2 | Ausstanzung | 30 | Seitenwand |
| 3 | Befestigungsabschnitt | 31 | Seitenwand |
| 4 | Anlageabschnitt | 32 | Vorsprung |
| 5 | Aufnahmeöffnung | | |
| 6 | Sichtfläche | | |
| 8 | Zwischenelement | | |
| 9 | Sichtfläche | | |
| 11 | Außenwand | | |
| 12 | Außenwand | | |
| 13 | Aufnahmeloch | | |
| 14 | Verbindungsstift | | |
| 15 | erster Endbereich | | |
| 16 | zweiter Endbereich | | |
| 17 | Klemmabschnitt | | |
| 18 | Aussparung | | |
| 19 | Einführabschnitt | | |
| 20 | Stützabschnitt | | |
| 21 | Stützvorsprung | | |
| 22 | Vertiefung | | |
| 23 | Aufnahmeabschnitt | | |
| 24 | Einführabschnitt | | |
| 25 | Nut | | |
| 26 | Montageabschnitt | | |
| 27 | Aufnahmenut | | |
| 28 | Abschlusselement | | |

## Patentansprüche

1. System umfassend längliche Profile (1), die über ihre Länge einen konstanten Querschnitt aufweisen, Zwischen- und/oder Abschlusselemente (8; 28), die dazu ausgelegt sind, zwischen Profilen (1) angeordnet zu werden oder ein Profil (1) stirnseitig abzuschließen, und jeweils zwei Endbereiche (15, 16) aufweisende, als separate Bauteile vorgesehene Verbindungsstifte (14), die dazu ausgelegt sind, ein Profil (1) stirnseitig mit einem Zwischen- und/oder Abschlusselement (8; 28) lösbar zu verbinden, wobei die Profilquerschnitte stirnseitig Aufnahmeöffnungen (5) zur Aufnahme des ersten Endbereiches (15) eines Verbindungsstiftes (14) bilden, wobei die Zwischen- und/oder Abschlusselemente (8; 28) Aufnahmelöcher (13) zur Aufnahme des zweiten Endbereiches (16) eines Verbindungsstiftes (14) aufweisen, wobei sich die Aufnahmelöcher (13) der Zwischen- und/oder Abschlusselemente (8; 28) jeweils durch eine Wand in einen Hohlraum des Zwischen- und/oder Abschlusselements (8; 28) erstrecken, wobei der erste Endbereich (15) der Verbindungsstifte (14) einen radial auswärts gewölbten Klemmabschnitt (17) maximalen Durchmessers aufweist, der mit zumindest einer länglichen, sich in Längsrichtung des Verbindungsstiftes (14) und durch diesen radial hindurch erstreckenden Aussparung (18) versehen ist, wobei die Abmessungen des Klemmabschnitts (17) derart an die Abmessungen der Aufnahmeöffnungen (5) angepasst sind, dass sich der Klemmabschnitt (17) unter Erzeugung eines Form- und Kraftschlusses in eine Aufnahmeöffnung (5) einsetzen lässt, und wobei der zweite Endbereich (16) einen eine ringförmige Vertiefung (22) aufweisenden Aufnahmeabschnitt umfasst, dessen Abmessungen derart an die Abmessungen der Aufnahmelöcher angepasst sind, dass der Aufnahmeabschnitt (23) die ein Aufnahmeloch (13) umgebende Wandung eines Zwischen- und/oder Abschlusselements (8; 28) zumindest formschlüssig aufnimmt.

2. System nach Anspruch 1, **dadurch gekennzeichnet, dass** sich der Durchmesser des ersten Endbereiches (15) der Verbindungsstifte (14) ausgehend von dem Klemmabschnitt (17) zum freien Ende hin verjüngt.

3. System nach Anspruch 1 oder 2, **dadurch gekennzeichnet, dass** der erste Endbereich (15) der Verbindungsstifte (14) einen benachbart zum Klemmabschnitt (17) angeordneten, zum zweiten Endbereich (16) weisenden Stützabschnitt (20) aufweist, der mit in Umfangsrichtung beabstandet zueinander angeordneten, radial auswärts vorstehenden Stützvorsprüngen (21) versehen ist.

4. System nach Anspruch 3, **dadurch gekennzeichnet, dass** der Stützabschnitt (20) des ersten Endbereiches (15) unmittelbar benachbart zum Aufnahmeabschnitt (23) des zweiten Endbereiches (16) angeordnet ist.

5. System nach einem der vorhergehenden Ansprüche, **dadurch gekennzeichnet, dass** sich der Durchmesser des zweiten Endbereiches (16) der Verbindungsstifte (14) ausgehend vom Aufnahmeabschnitt (23) zum freien Ende verjüngt.

6. System nach einem der vorhergehenden Ansprüche, **dadurch gekennzeichnet, dass** der zweite Endbereich (16) der Verbindungsstifte (14) mit einer sich ausgehend vom freien Ende des zweiten Endbereiches (16) in Längsrichtung des Verbindungsstiftes (14) und radial durch diesen hindurch erstreckenden Nut (25) versehen ist.

7. System nach Anspruch 6, **dadurch gekennzeichnet, dass** sich die Nut (25) durch den gesamten zweiten Endbereich (16) der Verbindungsstifte (14) erstreckt.

8. System nach einem der vorhergehenden Ansprüche, **dadurch gekennzeichnet, dass** die Verbindungsstifte (14) aus Kunststoff hergestellt sind.

9. System nach einem der vorhergehenden Ansprüche, **dadurch gekennzeichnet, dass** die Verbindungsstifte (14) als Spritzgussteile hergestellt sind.

10. System nach einem der vorhergehenden Ansprüche, **dadurch gekennzeichnet, dass** die Abmessungen der Sichtflächen (6) der Profile (1) und die Abmessungen der Sichtflächen (9) der Zwischen- und/oder Abschlusselemente (8; 28) derart aufeinander abgestimmt sind, dass diese im miteinander verbunden Zustand bündig ineinander übergehen.

11. System nach einem der vorhergehenden Ansprüche, **dadurch gekennzeichnet, dass** die Profilquerschnitte stirnseitig jeweils mit zwei Aufnahmeöffnungen (5) und die Zwischen- und/oder Abschlusselemente (8; 28) an zumindest einer Wand jeweils mit zwei entsprechend positionierten Aufnahmelöchern (13) versehen sind.

12. System nach einem der vorhergehenden Ansprüche, **dadurch gekennzeichnet, dass** die Profile (1) und die Zwischen- und/oder Abschlusselemente (8; 28) aus dem gleichen Material hergestellt sind.

13. System nach einem der vorhergehenden Ansprüche, **dadurch gekennzeichnet, dass** es sich bei den Profilen (1) um Fliesenabschlussprofile, um Leuchtmittel aufnehmende Profile oder um Kabelkanalprofile handelt.

## Claims

1. System comprising elongated profiles (1) having a constant cross-section over their length, intermediate and/or end elements (8; 28) designed to be arranged between profiles (1) or to terminate a profile (1) at the end, and connecting pins (14) provided as separate components, each having two end regions (15, 16) and designed to connect a profile (1) at the front end to an intermediate and/or end element (8; 28), wherein the profile cross-sections form receiving openings (5) at the front end for receiving the first end region (15) of a connecting pin (14), wherein the intermediate and/or end elements (8; 28) have receiving holes (13) for receiving the second end region (16) of a connecting pin (14), wherein the receiving holes (13) of the intermediate and/or end elements (8; 28) each extend through a wall into a cavity of the intermediate and/or end element (8; 28), wherein the first end region (15) of the connecting pins (14) has a radially outwardly curved clamping section (17) of maximum diameter, which is provided with at least one elongated recess (18) extending in the longitudinal direction of the connecting pin (14) and extending radially through it, wherein the dimensions of the clamping section (17) are adapted to the dimensions of the receiving openings (5) in such a way that the clamping section (17) can be inserted into a receiving opening (5) while producing a form and force fit, and wherein the second end region (16) comprises a receiving section having an annular recess (22), the dimensions of which are adapted to the dimensions of the receiving holes in such a way that the receiving section (23) at least positively engages the wall of an intermediate and/or end element (8; 28) at least in a form-fitting manner.

2. System according to claim 1, **characterized in that** the diameter of the first end region (15) of the connecting pins (14) tapers from the clamping section (17) towards the free end.

3. System according to claim 1 or 2, **characterized in that** the first end region (15) of the connecting pins (14) has a support section (20) arranged adjacent to the clamping section (17) and pointing towards the second end region (16), which support section is provided with support projections (21) arranged radially outwardly at a distance from each other in the circumferential direction. radially outwardly protruding support projections (21) arranged at a distance from one another in the circumferential direction.

4. System according to claim 3, **characterized in that** the support section (20) of the first end region (15) is arranged immediately adjacent to the receiving section (23) of the second end region (16).

5. System according to one of the preceding claims, **characterized in that** the diameter of the second end region (16) of the connecting pins (14) tapers from the receiving section (23) to the free end.

6. System according to one of the preceding claims, **characterized in that** the second end region (16) of the connecting pins (14) is provided with a groove (25) extending from the free end of the second end region (16) in the longitudinal direction of the connecting pin (14) and radially through it.

7. System according to claim 6, **characterized in that** the groove (25) extends through the entire second end region (16) of the connecting pins (14).

8. System according to one of the preceding claims, **characterized in that** the connecting pins (14) are made of plastic.

9. System according to one of the preceding claims, **characterized in that** the connecting pins (14) are made of injection-molded parts.

10. System according to one of the preceding claims, **characterized in that** the dimensions of the visible surfaces (6) of the profiles (1) and the dimensions of the visible surfaces (9) of the intermediate and/or end elements (8; 28) are coordinated with each other in such a way that they merge flush with each other when connected to each other.

11. System according to one of the preceding claims, **characterized in that** the profile cross-sections are each provided with two receiving openings (5) at the front end and the intermediate and/or end elements (8; 28) are each provided with two correspondingly positioned receiving holes (13) on at least one wall.

12. System according to one of the preceding claims, **characterized in that** the profiles (1) and the intermediate and/or end elements (8; 28) are made of the same material.

13. System according to one of the preceding claims, **characterized in that** the profiles (1) are tile end profiles, profiles for accommodating lighting elements, or cable duct profiles.

## Revendications

1. Système comprenant des profilés allongés (1) qui présentent une section transversale constante sur leur longueur, des éléments intermédiaires et/ou d'extrémité (8 ; 28) qui sont conçus pour être disposés entre les profilés (1) ou pour fermer un profilé (1) à son extrémité, et des goupilles de liaison (14) prévues comme composants séparés, présentant chacune deux zones d'extrémité (15, 16) et conçues pour relier de manière amovible un profilé (1) à une extrémité à un élément intermédiaire et/ou d'extrémité (8; 28), les sections transversales des profilés formant des ouvertures de réception (5) à l'extrémité pour recevoir la première zone d'extrémité (15) d'une goupille de liaison (14), les éléments intermédiaires et/ou d'extrémité (8; 28) présentant des trous de réception (13) destinés à recevoir la deuxième zone d'extrémité (16) d'une goupille de liaison (14), les trous de réception (13) des éléments intermédiaires et/ou d'extrémité (8; 28) s'étendant chacun à travers une paroi dans une cavité de l'élément intermédiaire et/ou d'extrémité (8; 28), la première zone d'extrémité (15) des goupilles de liaison (14) présentant une section de serrage (17) bombée radialement vers l'extérieur, de diamètre maximal, qui est pourvue d'au moins un évidement (18) s'étendant dans la direction longitudinale de la goupille de liaison (14) et s'étendant radialement à travers celle-ci, les dimensions de la section de serrage (17) étant adaptées aux dimensions des ouvertures de réception (5) de telle sorte que la section de serrage (17) puisse être insérée dans une ouverture de réception (5) en créant une liaison par complémentarité de forme et par adhérence, et la deuxième zone d'extrémité (16) comprenant une partie de réception présentant un renfoncement annulaire (22) dont les dimensions sont adaptées aux dimensions des trous de réception de telle sorte que la partie de réception (23) reçoit au moins par complémentarité de forme la paroi d'un élément intermédiaire et/ou d'extrémité (8; 28) entourant un trou de réception.

2. Système selon la revendication 1, **caractérisé en ce que** le diamètre de la première zone d'extrémité (15) des goupilles de liaison (14) se rétrécit à partir de la section de serrage (17) vers l'extrémité libre.

3. Système selon la revendication 1 ou 2, **caractérisé en ce que** la première zone d'extrémité (15) des goupilles de liaison (14) présente une section d'appui (20) disposée à proximité de la section de serrage (17) et orientée vers la deuxième zone d'extrémité (16), laquelle section d'appui est pourvue de saillies d'appui (21) espacées les unes des autres dans le sens circonférentiel et faisant saillie radialement vers l'extérieur.

4. Système selon la revendication 3, **caractérisé en ce que** la section d'appui (20) de la première zone d'extrémité (15) est disposée immédiatement à proximité de la partie de réception (23) de la deuxième zone d'extrémité (16).

5. Système selon l'une des revendications précédentes, **caractérisé en ce que** le diamètre de la deuxième zone d'extrémité (16) des goupilles de liaison (14) se rétrécit à partir de la partie de réception (23) vers l'extrémité libre.

6. Système selon l'une des revendications précédentes, **caractérisé en ce que** la deuxième zone d'extrémité (16) des goupilles de liaison (14) est pourvue d'une rainure (25) s'étendant à partir de l'extrémité libre de la deuxième zone d'extrémité (16) dans le sens longitudinal de la goupille de liaison (14) et radialement à travers celle-ci.

7. Système selon la revendication 6, **caractérisé en ce que** la rainure (25) s'étend sur toute la deuxième zone d'extrémité (16) des goupilles de liaison (14).

8. Système selon l'une des revendications précédentes, **caractérisé en ce que** les goupilles de liaison (14) sont fabriquées en plastique.

9. Système selon l'une des revendications précédentes, **caractérisé en ce que** les goupilles de liaison (14) sont fabriquées sous forme de pièces moulées par injection.

10. Système selon l'une des revendications précédentes, **caractérisé en ce que** les dimensions des surfaces visibles (6) des profilés (1) et les dimensions des surfaces visibles (9) des éléments intermédiaires et/ou d'extrémité (8; 28) sont adaptées les unes aux autres de telle sorte qu'elles se passent les unes dans les autres sans transition lorsqu'elles sont reliées entre elles.

11. Système selon l'une des revendications précédentes, **caractérisé en ce que** les sections transversales des profilés sont pourvues chacune de deux ouvertures de réception (5) à leur extrémité frontale et les éléments intermédiaires et/ou d'extrémité (8; 28) sont pourvus chacun de deux trous de réception (13) positionnés de manière correspondante sur au moins une paroi.

12. Système selon l'une des revendications précédentes, **caractérisé en ce que** les profilés (1) et les éléments intermédiaires et/ou d'extrémité (8; 28) sont fabriqués dans le même matériau.

13. Système selon l'une des revendications précédentes, **caractérisé en ce que** les profilés (1) sont des profilés de finition pour carrelage, des profilés de réception de sources lumineuses ou des profilés de goulotte de câbles.
